# FASCICULE DE BREVET EUROPEEN

(11) **EP 2 924 483 B1**
(45) Date de publication et mention de la délivrance du brevet: **20.05.2020**
(21) Numéro de dépôt: 15161778.4
(22) Date de dépôt: 30.03.2015
(51) Int. Cl.: G02B 6/38, H01R 13/52, H01R 13/447

(54) **CONNECTEUR COMPRENANT UNE MEMBRANE OPERCULE**
VERSCHLUSSMEMBRAN UMFASSENDER VERBINDUNGSSTECKER
CONNECTOR INCLUDING A SEALING MEMBRANE

(30) Priorité: 29.03.2014 FR 1453905
(43) Date de publication de la demande: 30.09.2015
(73) Titulaire: SOURIAU, 78000 Versailles (FR)
(72) Inventeur: PAGOT, Vanessa, 72100 Le Mans (FR); PHILIPPE, Alain, 72560 Change (FR); METZGER, Vincent, 72000 Le Mans (FR)
(74) Mandataire: Ipside

(56) Documents cités:
- EP-A1- 2 045 194
- EP-A1- 2 159 612
- US-A1- 2005 147 361
- US-A1- 2013 308 909
- US-B1- 6 474 490

## Description

L'invention concerne un dispositif de protection par opercule d'un connecteur, notamment un connecteur optique. L'invention est plus particulièrement, mais non exclusivement, destinée au domaine de la connectique utilisée dans un environnement sévère, c'est-à-dire dans un milieu soumis à des poussières, de la pluie, des embruns, etc., et dans lequel les ensembles connecteurs doivent être étanches.

Un ensemble connecteur comporte un connecteur mâle, et un connecteur femelle, comprenant chacun des contacts électriques ou optiques, et destinés à s'accoupler l'un à l'autre pour assurer une continuité électrique ou optique entre les contacts du connecteur mâle et les contacts du connecteur femelle.

En matière de connecteur optique, l'introduction dans ledit connecteur d'un corps étranger touchant les contacts optiques, est susceptible de dégrader les performances du connecteur, soit par la présence même de ce corps étranger, par exemple une poussière, soit par les conséquences de son interaction mécanique avec les contacts, notamment par rayure.

Selon l'art antérieur, pour une utilisation en environnement sévère, chaque ensemble connecteur est muni de bouchons d'obturation placés, l'un devant la face avant du connecteur mâle, et l'autre devant la face avant du connecteur femelle, lesquels bouchons sont destinés à protéger les contacts. Ces deux bouchons sont retirés juste avant de procéder à l'accouplement des deux connecteurs. Alternativement ou de manière complémentaire, des petits bouchons, ou bouchons individuels, sont également positionnés directement sur les contacts et retirés lors de la connexion. Ces différents bouchons n'assurent pas tous l'étanchéité recherchée, par conséquent, des poussières et de l'humidité sont susceptibles de s'insérer à l'intérieur du connecteur mâle ou femelle. Ainsi, les contacts sont systématiquement nettoyés avant l'accouplement, ce qui présente des difficultés dans un environnement sévère. De plus, lesdits bouchons présentent un encombrement aussi bien avant qu'après l'accouplement, puisque, même s'ils sont attachés aux connecteurs, ils nécessitent un certain espace pour pouvoir être retirés et demandent un placement spécifique pour être stockés durant et après l'accouplement.

Il est connu du document US2013/0308909 un connecteur comportant une ferrule et comprenant une membrane, fixée de manière étanche à ladite ferrule par un zone d'adhésion et obturant totalement l'ouverture du connecteur laquelle membrane opercule est détachable de la ferrule par pelage et comporte une languette pour la préhension de la membrane au cours du pelage.

Selon un autre aspect, plus particulier au cas des connecteurs dont les contacts comportent des lentilles, il est nécessaire de protéger l'opérateur réalisant l'installation de toute exposition au faisceau optique.

L'invention vise à résoudre les inconvénients de l'art antérieur et concerne à cette fin un connecteur comportant une ferrule et comprenant une membrane opercule translucide ou transparente, fixée de manière étanche à ladite ferrule par une partie adhésive et obturant totalement l'ouverture du connecteur, laquelle membrane opercule est détachable de la ferrule par pelage et comporte des moyen, notamment une languette, pour la préhension de la membrane au cours du pelage, la membrane opercule comportant une ligne de découpe privilégiée empêchant sa réinstallation sur la ferrule après pelage. Ainsi, la membrane opercule protège les contacts de toute introduction de corps étranger, et est facilement retirée juste avant l'utilisation du connecteur. La membrane étant à usage unique, du fait de la présence d'une ligne de découpe privilégiée, l'intégrité de la membrane opercule est un indicateur de première utilisation du connecteur et donc de propreté des contacts. La transparence de la membrane opercule permet un contrôle visuel des contacts du connecteur, sans retirer ladite membrane, et plus particulièrement dans le cas d'un connecteur optique, permet de vérifier la continuité optique du harnais ainsi connecté avant de réaliser la connexion, sans exposer les contacts à l'environnement.

L'invention est avantageusement mise en œuvre selon les modes de réalisation exposés ci-après, lesquels sont à considérer individuellement ou selon toute combinaison techniquement opérante.

Selon des variantes de réalisation, la membrane opercule est liée à la ferrule par collage ou par thermoscellage.

Avantageusement, la membrane opercule est enduite d'une substance pégueuse sur sa face interne obturant la ferrule. Ainsi, cette couche pégueuse piège les éventuelles poussières se trouvant dans le volume du connecteur fermé par la membrane opercule.

Avantageusement, le connecteur objet de l'invention comporte un bouchon d'obturation apte à coiffer la ferrule et la membrane opercule. Ainsi, ledit bouchon procure une protection mécanique de la membrane jusqu'à l'utilisation du connecteur. Comparativement aux modes de réalisation de l'art antérieur, la présence de la membrane opercule permet d'obtenir une protection étanche même sans joint dans le bouchon ou sur la ferrule.

L'invention concerne également un procédé pour la mise en place d'une membrane opercule sur l'extrémité d'un connecteur selon l'un quelconque des modes de réalisation précédents, lequel procédé comprend les étapes consistant à :
i. mettre en place la membrane opercule dans le fond du bouchon ;
ii. activer la partie adhésive de la membrane opercule ;
iii. coiffer l'extrémité du connecteur avec le bouchon comprenant l'opercule.

Ainsi protégée par le bouchon, la membrane opercule estfacilement mise en place sur le connecteur, même dans des conditions de manipulation délicates, par exemple avec des gants.

L'invention concerne également un bouchon selon la revendication 7.

Ainsi, ce bouchon permet l'obturation d'un connecteur selon des normes d'étanchéité IP67 en assurant une double sécurité de l'obturation.

L'invention est exposée ci-après selon ses modes de réalisation préférés, nullement limitatifs, et en référence aux figures 1 à 7 dans lesquelles :
- la figure 1 montre, en vue de profil, un exemple de réalisation d'un connecteur selon l'invention sans membrane opercule ;
- la figure 2 représente selon une vue de face, un exemple de réalisation d'une membrane opercule adaptée au connecteur de la figure 1 ;
- la figure 3 est une vue en coupe selon 2-2 définie figure 2 de l'exemple de réalisation d'une membrane opercule représentée figure 2 ;
- la figure 4 montre selon une vue en perspective, un autre exemple de réalisation d'une membrane opercule adaptée à un connecteur selon l'invention ;
- la figure 5 est une vue en coupe selon 4-4 de la membrane représentée figure 4 ;
- la figure 6 représente selon une vue en perspective et en éclaté, un exemple de réalisation d'un bouchon selon l'invention et sa mise en œuvre sur l'extrémité d'un connecteur ;
- et la figure 7 montre selon une vue en perspective et en éclaté, un exemple de réalisation d'un bouchon selon l'invention et sa mise en œuvre par vissage sur l'extrémité d'un connecteur.

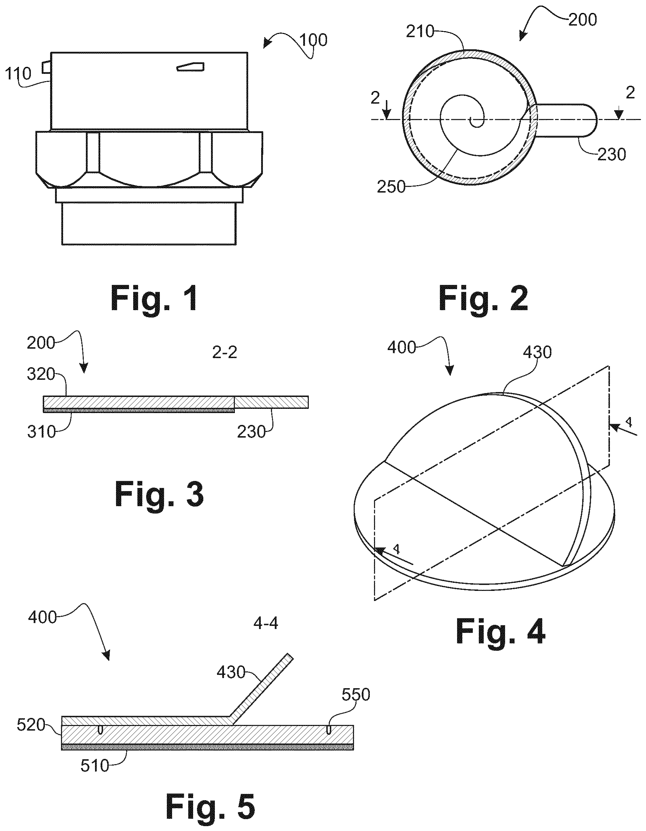

Figure 1, selon un exemple de réalisation le connecteur (100) objet de l'invention est un connecteur optique comprenant une ferrule (110). Le terme « ferrule », également désigné par « virole », est ici pris dans son acception la plus large, et indique que le contact du connecteur se trouve à l'intérieur d'un volume protégé latéralement. Ledit connecteur est indifféremment en matière plastique, en bronze, en aluminium en acier inoxydable ou toute autre matière et constitue indifféremment un connecteur mâle ou un connecteur femelle. Bien que l'invention soit ici exposée selon un mode de réalisation où le connecteur (100) est un connecteur optique de section sensiblement circulaire, l'homme du métier adapte l'invention à toute forme de connecteur, notamment de section rectangulaire ou polygonale et à toute forme de connexion.

Figure 2, la membrane opercule (200) est destinée à être placée à l'extrémité de la ferrule de sorte à fermer le connecteur de manière étanche. Selon un exemple de réalisation, ladite membrane comporte une zone (210) adhésive encollée ou comprenant une couche adaptée au thermoscellage, correspondant à l'épaisseur circonférentielle de l'extrémité de la ferrule du connecteur. Selon cet exemple de réalisation, cette zone (210) de collage permet de fixer la dite membrane (200) à l'extrémité du connecteur. Une languette (230) de dimension suffisamment importante pour être facilement manipulée avec des gants, permet de retirer ladite membrane, par pelage, après collage. La membrane (200) opercule comporte une ligne (250) de découpe privilégiée de sorte que l'enlèvement de la membrane de l'extrémité du connecteur rend ladite membrane non réutilisable. La zone de découpe privilégiée est réalisée selon différentes techniques connues de l'art antérieur permettant d'obtenir une déchirure orientée sans traverser l'épaisseur de la membrane.

Figure 3, selon une variante de réalisation de la membrane (200) opercule, la face, dite interne, c'est-à-dire la face de la membrane est qui tournée vers l'intérieur du connecteur lorsque la membrane (200) est placée sur ledit connecteur, est entièrement couverte d'une couche (310) de colle ou d'une couche adaptée au thermoscellage. À titre d'exemple non limitatif, la couche de thermoscellage est constituée d'un film de polyéthylène téréphtalate amorphe (APET) d'une épaisseur de l'ordre de 30 µm (30.10⁻⁶ m), co-extrudé avec un film (320) de poly(téréphtalate d'éthylène) ou PET, d'une épaisseur de l'ordre de 150 µm. Selon un autre mode de réalisation, la couche d'adhésion est constituée d'une couche de colle. Selon des variantes de réalisation ladite colle est une colle de type PSA pour « *pressure sensitive adhesive* » ou encore une colle thermofusible, sans que ces variantes de réalisation ne soient exclusives. L'utilisation d'une colle PSA permet, notamment, d'utiliser la face interne (320) de la membrane opercule, face qui reste pégueuse, pour piéger les éventuelles poussières se trouvant à l'intérieur de la partie du connecteur fermée par la membrane. Ainsi, lesdites poussières se collent sur cette face (320) adhésive et ne polluent pas les contacts.

Selon un autre exemple de réalisation, non limitatif, la membrane est constituée de plusieurs films collés entre eux, par exemple, un film PET d'une épaisseur 100 µm enduit sur une face avec un adhésif acrylique permanent à base de solvant, ledit film étant collé sur un autre film PET d'une épaisseur de 60 µm avec un adhésif permanent de polysiloxane modifié et qui réalise la fixation de la membrane sur l'extrémité du connecteur.

À titre d'exemples non limitatifs, la ligne de découpe est obtenue par un prédécoupage mécanique en pointillé d'une couche collée, en stratification, sur une autre couche non prédécoupée, ou encore par une ablation ou la création, au moyen d'un laser, d'une ligne de fusion s'étendant selon le chemin de déchirure facile visé.

Dans le cas où la surface interne de la membrane est couverte d'une couche (320) d'une colle de type PSA, ladite couche est, selon un exemple de réalisation, protégée par une fine feuille (non représentée), feuille qui doit être retirée pour exposer la colle PSA et ainsi activer les possibilités de collage. Dans le cas où la couche de colle (320) est de type thermofusible, l'activation de la colle est obtenue en portant ladite couche (320) à la température appropriée pour obtenir le collage. Quelque soit l'opération de collage celle-ci est préférentiellement réalisée dans un environnement propre et après le nettoyage des contacts.

Figure 4, selon un autre exemple de réalisation, la membrane (400) opercule comprend une languette (430) centrale également adaptée au retrait de la membrane (400) opercule de l'extrémité du connecteur.

Figure 5, selon une vue en coupe, la membrane (400) correspondant à ce dernier mode de réalisation, comprend une couche (510) pour réaliser la liaison de la membrane (400) avec l'extrémité du connecteur, par collage ou par thermoscellage, colaminée avec une couche (520) de PET sur laquelle est fixée une couche réalisant la languette. La couche (520) de PET comprend une ligne (550) de découpe privilégiée, rendant la membrane inutilisable après pelage. La languette est constituée de PET ou d'un autre polymère, par exemple un polyamide, assemblée à la surface externe de la membrane opercule, par co-extrusion, colaminage, soudage ou collage.

La membrane opercule est transparente ou translucide, ce qui permet de contrôler visuellement les contacts du connecteur, et, notamment lorsque le connecteur objet de l'invention est un connecteur optique, de vérifier l'intégrité du faisceau de fibres optiques arrivant au connecteur et leur connexion avec les contacts dudit connecteur. De plus, tout en offrant cette possibilité de contrôle, la membrane opercule protège les yeux de l'opérateur de l'exposition au laser véhiculé par lesdites fibres optiques.

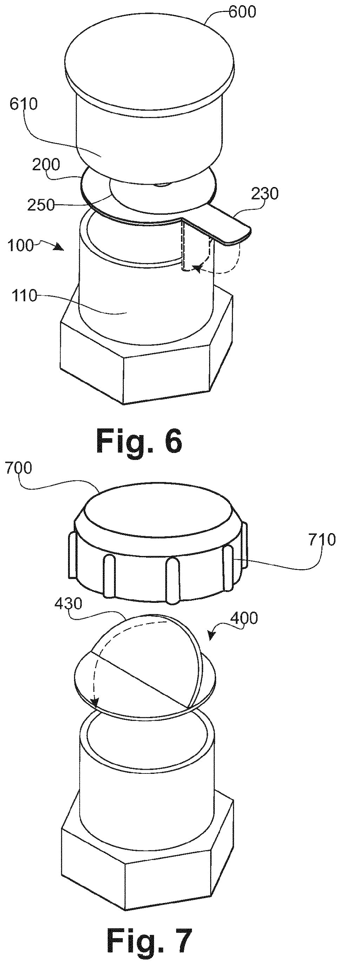

Figure 6, la membrane (200) opercule est avantageusement associée à un bouchon (600) apte à coiffer ladite membrane (200) et l'extrémité du connecteur (100). Ainsi, ledit bouchon (600) assure une protection mécanique de l'extrémité du connecteur et de la membrane opercule, ladite membrane assurant la fermeture étanche du connecteur. Ledit bouchon comporte une jupe (610) apte à se centrer sur la ferrule du connecteur. Selon un premier mode de réalisation, la membrane (200) est d'abord fixée à l'extrémité du connecteur, par collage ou par thermoscellage, puis, la languette (230) est rabattue sur la surface cylindrique extérieure de la ferrule, et le bouchon (600) est glissé sur l'extrémité du connecteur. La languette est alors prise entre la ferrule (110) et la jupe (610) du bouchon. Selon un exemple de réalisation, la pose de la membrane opercule est réalisée en salle blanche de sorte à assurer la propreté des contacts, notamment lorsqu'il s'agit de contacts optiques.

Alternativement, la membrane (200) opercule est placée au fond du bouchon (600) et posée sur l'extrémité du connecteur (600), en même temps que ledit bouchon, après avoir activé la zone de collage de la membrane. L'activation de la zone de collage consiste à retirer la feuille de protection de la zone encollée, par exemple lorsqu'il s'agit d'une colle de type PSA, ou à porter le bouchon à une température approprié lorsqu'il s'agit d'une colle thermofusible, ou à l'application d'un composant sur l'extrémité du connecteur s'il s'agit d'une colle bicomposant.

Figure 7, selon une variante de réalisation, le bouchon (700) est un bouchon à visser, dont la jupe (710) comporte un filetage intérieur, apte à coopérer avec un filetage (non représenté) sur la surface cylindrique extérieure de la ferrule. Dans ce cas, la membrane (400) opercule est préférentiellement à languette (430) centrale de sorte à ce que ladite languette n'interfère pas avec le filetage du connecteur et le vissage du bouchon (700). Selon différents modes de mise, en œuvre la membrane opercule est soit placée sur l'extrémité du connecteur avant le vissage du bouchon ou placée dans le fond du bouchon, sa zone collante étant activée avant l'installation du bouchon à l'extrémité du connecteur.

Quel que soit le type de bouchon, celui-ci facilite la manipulation de la membrane opercule et son installation sur l'extrémité du connecteur, sans avoir recours à un outil spécifique.

La description ci-avant et les exemples de réalisation montrent que l'invention atteint les objectifs visés, en particulier elle permet d'obturer de manière étanche l'extrémité d'un connecteur, mâle ou femelle, de manière économique et avec un encombrement supplémentaire réduit. De plus, l'utilisation de cet opercule permet de supprimer les opérations de nettoyage des contacts particulièrement délicates sur chantier.

## Revendications

1. Connecteur (100) comportant une ferrule (110) et comprenant une membrane (200, 400) opercule translucide ou transparente, fixée de manière étanche à ladite ferrule par une zone d'adhésion, et obturant totalement l'ouverture du connecteur, laquelle membrane opercule est détachable de la ferrule par pelage et comporte des moyens (230, 430), notamment une languette, pour la préhension de la membrane au cours du pelage, **caractérisé en ce que** la membrane opercule comporte une ligne (250, 550) de découpe privilégiée empêchant sa réinstallation sur la ferrule après pelage.

2. Connecteur selon la revendication 1, dans lequel la membrane opercule est liée à la ferrule par collage.

3. Connecteur selon la revendication 1, dans lequel la membrane opercule est liée à la ferrule par thermoscellage.

4. Connecteur selon la revendication 1, dans lequel la membrane opercule est enduite d'une substance adhésive sur toute sa face interne obturant la ferrule.

5. Connecteur selon la revendication 1, comprenant un bouchon (600, 700) d'obturation apte à coiffer la ferrule et la membrane (200, 400) opercule.

6. Procédé pour la mise en place d'une membrane (200, 400) opercule sur l'extrémité d'un connecteur (100) selon la revendication 5, **caractérisé en ce qu'**il comprend les étapes consistant à :
i. mettre en place la membrane (200, 400) opercule dans le fond du bouchon (600, 700) ;
ii. activer la partie adhésive (210, 310, 510) de la membrane (200, 400) opercule ;
iii. coiffer l'extrémité du connecteur (100) avec le bouchon (600, 700) comprenant l'opercule.

7. Bouchon (600, 700) adapté à la ferrule d'un connecteur pour la mise en œuvre d'un procédé selon la revendication 6, et comprenant :
a. une jupe (610, 710) apte à coopérer avec la ferrule du connecteur pour le maintien dudit bouchon sur l'extrémité dudit connecteur ;
b. une membrane (200, 400) opercule translucide ou transparente, installée au fond du bouchon et comprenant une surface adhésive (310, 510) activable afin de se fixer de manière étanche à ladite ferrule, obturant totalement l'ouverture du connecteur, laquelle membrane opercule étant détachable de la ferrule par pelage et comportant des moyens (230,430), notamment une languette, pour la préhension de la membrane au cours du pelage et une ligne (250,550) de découpe privilégiée empêchant sa réinstallation sur la ferrule après pelage ;
c. des moyens pour activer la surface adhésive de la membrane (200, 400) opercule alors que celle-ci se trouve dans le bouchon (600, 700).

## Patentansprüche

1. Verbinder (100), der eine Ferrule (110) umfasst und eine durchscheinende oder durchsichtige Deckelmembran (200, 400) umfasst, die über einen Haftbereich dicht an der Ferrule befestigt ist und die Öffnung des Verbinders vollständig verschließt, welche Deckelmembran durch Abziehen von der Ferrule abgelöst werden kann und Mittel (230, 430), insbesondere eine Lasche, zum Greifen der Membran während des Abziehens umfasst, **dadurch gekennzeichnet, dass** die Deckelmembran eine Sollbruch-Schnittlinie (250, 550) umfasst, die nach dem Abziehen ihre erneute Anbringung auf der Ferrule verhindert.

2. Verbinder nach Anspruch 1, wobei die Deckelmembran durch Klebung mit der Ferrule verbunden ist.

3. Verbinder nach Anspruch 1, wobei die Deckelmembran durch Heißsiegelung mit der Ferrule verbunden ist.

4. Verbinder nach Anspruch 1, wobei die Deckelmembran auf ihrer ganzen Innenseite, die die Ferrule verschließt, mit einem Haftstoff beschichtet ist.

5. Verbinder nach Anspruch 1, der einen Verschlussstopfen (600, 700) umfasst, welcher in der Lage ist, die Ferrule und die Deckelmembran (200, 400) zu bedecken.

6. Verfahren zum Platzieren einer Deckelmembran (200, 400) auf dem Ende eines Verbinders (100) nach Anspruch 5, **dadurch gekennzeichnet, dass** es die Schritte umfasst, die darin bestehen:
i. die Deckelmembran (200, 400) im Boden des Stopfens (600, 700) zu platzieren;
ii. den haftenden Teil (210, 310, 510) der Deckelmembran (200, 400) zu aktivieren;
iii. das Ende des Verbinders (100) mit dem den Deckel umfassen Stopfen (600, 700) zu bedecken.

7. Stopfen (600, 700), der für die Ferrule eines Verbinders zur Umsetzung eines Verfahrens nach Anspruch 6 geeignet ist und umfasst:
a. eine Schürze (610, 710), die in der Lage ist, für den Halt des Stopfens auf dem Ende des Verbinders mit der Ferrule des Verbinders zusammenzuwirken;
b. eine durchscheinende oder durchsichtige Deckelmembran (200, 400), die am Boden des Stopfens angebracht ist und eine Haftfläche (310, 510) umfasst, die aktiviert werden kann, um sich dicht an der Ferrule zu befestigen, wodurch sie die Öffnung des Verbinders vollständig verschließt, welche Deckelmembran durch Abziehen von der Ferrule abgelöst werden kann und Mittel (230, 430), insbesondere eine Lasche, zum Greifen der Membran während des Abziehens, und eine Sollbruch-Schnittlinie (250, 550) umfasst, die nach dem Abziehen ihre erneute Anbringung auf der Ferrule verhindert;
c. Mittel, um die Haftfläche der Deckelmembran (200, 400) zu aktivieren, wenn sich dieselbe im Stopfen (600, 700) befindet.

## Claims

1. Connector (100) including a ferrule (110) and comprising a translucid or transparent cap membrane (200, 400), fixed in a sealed manner to said ferrule by an adhesion zone, and totally blocking the opening of the connector, which cap membrane is detachable from the ferrule by peeling and includes means (230, 430), in particular a strip, for the gripping of the membrane during the peeling, **characterised in that** the cap membrane includes a favoured cutting line (250, 550) preventing the reinstallation thereof on the ferrule after peeling.

2. Connector according to claim 1, wherein the cap membrane is connected to the ferrule by gluing.

3. Connector according to claim 1, wherein the cap membrane is connected to the ferrule by heat sealing.

4. Connector according to claim 1, wherein the cap membrane is coated with an adhesive substance over all of the inner face thereof blocking the ferrule.

5. Connector according to claim 1, comprising a blocking stopper (600, 700) capable of curling the ferrule and the cap membrane (200, 400).

6. Method for implementing a cap membrane (200, 400) on the end of a connector (100) according to claim 5, **characterised in that** it comprises the steps of:
i. implementing the cap membrane (200, 400) in the bottom of the stopper (600, 700);
ii. activating the adhesive portion (210, 310, 510) of the cap membrane (200, 400);
iii. curling the end of the connector (100) with the stopper (600, 700) comprising the cap.

7. Connector (600, 700) adapted to the ferrule of a connector for implementing a method according to claim 6, and comprising:
a. a skirt (610, 710) capable of cooperating with the ferrule of the connector for the maintaining of said stopper on the end of said connector;
b. a translucid or transparent cap membrane (200, 400) installed at the bottom of the stopper
and comprising an adhesive surface (310, 510) which can be activated in order to be fixed in a sealed manner to said ferrule, totally blocking the opening of the connector, which cap membrane being detachable from the ferrule by peeling and including means (230, 430), in particular a strip, for the gripping of the membrane during the peeling and a favoured cutting line (250, 550) preventing the reinstallation thereof on the ferrule after peeling;
c. means for activating the adhesive surface of the cap membrane (200, 400) while it is located in the stopper (600, 700).
